# EUROPEAN PATENT APPLICATION

(11) **EP 4 624 616 A1**
(43) Date of publication of application: **01.10.2025**
(21) Application number: 23894646.1
(22) Date of filing: 22.11.2023
(51) Int. Cl.: C22C 38/00, B23K 26/364, C21D 8/12, C21D 9/46, C22C 38/60, H01F 1/147

(54) **GRAIN-ORIENTED ELECTRICAL STEEL SHEET AND MANUFACTURING METHOD THEREFOR**

(30) Priority: 22.11.2022 JP 2022186168
(71) Applicant: NIPPON STEEL CORPORATION, Chiyoda-ku Tokyo 100-8071 (JP)
(72) Inventor: WADA, Naoki, Tokyo 100-8071 (JP); TAKAHASHI, Masaru, Tokyo 100-8071 (JP); MOGI, Hisashi, Tokyo 100-8071 (JP); IWAKI, Masataka, Tokyo 100-8071 (JP)
(74) Representative: Vossius & Partner Patentanwälte Rechtsanwälte mbB
(86) International application number: PCT/JP2023/042050
(87) International publication number: WO 2024/111642

(57) **Abstract**

A grain-oriented electrical steel sheet includes a steel sheet having a surface in which a plurality of grooves extending in a direction intersecting a rolling direction and having a depth in a sheet thickness direction are formed. In a cross section of the steel sheet parallel to the rolling direction and parallel to the sheet thickness direction, at least one projection is present on a side surface or a bottom surface of the groove, the projection has a maximum height of 2 to 50 µm and a maximum width of 2 to 50 µm, and the orientation difference between the average crystal orientation of the projection and the Goss orientation is 10 degrees or more.

## Description

### TECHNICAL FIELD

The present invention relates to a grain-oriented electrical steel sheet and a manufacturing method therefor.

Priority is claimed on Japanese Patent Application No. 2022-186168, filed November 22, 2022, the content of which is incorporated herein by reference.

### BACKGROUND ART

A grain-oriented electrical steel sheet is a soft magnetic material and is mainly used as a core material of a transformer. Thus, the grain-oriented electrical steel sheet is required to have magnetic characteristics such as high magnetization characteristics and a low iron loss. The iron loss is a power loss due to thermal energy consumption that occurs in a case where a core is excited by an AC magnetic field, and the iron loss is required to be as low as possible from the viewpoint of energy saving. The level of the iron loss is affected by magnetic susceptibility, the sheet thickness, the coating tension, the impurity amount, the electric resistivity, the crystal grain size, the magnetic domain width, and the like. Even at present when various techniques have been developed regarding the grain-oriented electrical steel sheet, research and development for reducing the iron loss is being continued in order to increase energy efficiency.

A technique for performing laser irradiation has been proposed as one of methods for reducing the iron loss. In this technique, strain is introduced to a surface by the laser irradiation, and a 180° magnetic domain width is refined. As a result, an eddy-current loss that is a part of the iron loss can be reduced.

For example, Patent Document 1 discloses a method for manufacturing a grain-oriented electrical steel sheet in which a magnetic domain is refined by irradiation with a laser beam. The method includes a step of irradiating a surface of the grain-oriented electrical steel sheet with a condensed continuous wave laser beam while scanning the surface in a direction inclined from a rolling direction of the grain-oriented electrical steel sheet, and a step of repeating a portion scanned with the continuous wave laser beam while shifting the portion at a predetermined interval. When the average power of the continuous wave laser beam is represented as P (W), the scanning speed is represented as Vc (mm/s), the predetermined interval is represented as PL (mm), and an input energy Ua is defined as Ua = P/(Vc × PL) (mJ/mm²), 1.0 mm ≤ PL ≤ 3.0 mm, and 0.8 mJ/mm² ≤ Ua ≤ 2.0 mJ/mm² are satisfied.

Patent Document 1 discloses that iron losses in both directions of an L direction and a C direction of the grain-oriented electrical steel sheet can be reduced easily while ensuring high productivity.

However, for example, in a case where a wound core is manufactured, since the grain-oriented electrical steel sheet is bent and formed, stress-relief annealing is required. Accordingly, in such a method, the strain introduced into the grain-oriented electrical steel sheet is released by the stress-relief annealing. Thus, an effect of the magnetic domain refinement by the laser irradiation cannot be obtained.

Thus, it has been proposed that the 180° magnetic domain width is refined to reduce the eddy-current loss by forming a groove in a sheet surface as in the case of strain introduction.

For example, Patent Document 2 discloses a method for improving iron loss characteristics of grain-oriented electrical steel sheets to which stress-relief annealing can be applied, in which irradiation is performed by controlling a laser beam and a recessed portion having a width of 0.5 mm or less and a depth of 10 µm or more is formed in a rolling direction.

In a case where the groove is formed by the laser irradiation, a melt generated by the laser irradiation is blown off with an assist gas to form the groove. However, in such a case, although the melt inside the groove is substantially removed, a projection may be formed by solidifying the melt around the groove. In a case where the projection is present around the groove, a gap is generated when the steel sheets are laminated, and thus, a magnetic flux hardly flows. As a result, the iron loss increases.

The projection is removed to some extent by brushing or the like after the laser irradiation. However, even though the brushing or the like is performed, since the brushing or the like is performed so that a sheet thickness is not reduced, it is difficult to completely remove the projection. Such projection is not considered in Patent Document 2.

Regarding a solidified portion of a melt, Patent Document 3 discloses a grain-oriented electrical steel sheet having a sheet surface in which a groove is provided. In a region spreading outward in a groove width direction from an end portion of the groove in a groove width direction, a surface projection protruding from the sheet surface extends along a longitudinal groove direction, and an average projection height of the surface projection is more than 5 µm and 10 µm or less. In a case where the surface projection is viewed in a cross section including the longitudinal groove direction and the normal direction of the sheet surface, the length of a portion having a height of 50% or more of a height of a peak point appearing on a profile of the surface projection in the longitudinal groove direction is 30% or more in total with respect to a total length in the longitudinal groove direction of the surface projection. An image of the sheet surface including the groove is acquired by using an apparatus capable of measuring a three-dimensional shape of the sheet surface. A portion higher than a reference plane in a peripheral portion of the groove is identified as the surface projection, and the cross section includes a peak point of a height measured by the apparatus.

However, in Patent Document 3, an increase in a hysteresis loss can be prevented to some extent by controlling the projection height and the like of the surface projection. However, the eddy-current loss is not reduced, and there is a problem that a sufficient effect of reducing the iron loss cannot be obtained.

Patent Document 4 discloses an electrical steel sheet in which a groove formed so as to have a first side surface, a second side surface, and a bottom surface facing each other on a steel sheet and solidified portions formed on the ^{f}irst side surface, the second side surface, and the bottom surface by solidifying a melting by-product of the steel sheet in a procedure of forming the groove are provided, the solidified portion does not remain on the bottom surface and the solidified portions are formed on the first and second side surfaces of the groove, or the solidified portions are formed on the bottom surface and the second side surface. In a case where the solidified portion does not remain on the bottom surface and the solidified portions are formed on the first and second side surfaces of the groove, an opening portion is formed on the bottom surface. In a case where the solidified portions are formed on the bottom surface and the second side surface, the opening portion is formed in the first side surface. The solidified portions formed on the first and second side surfaces have a thickness decreased toward the bottom surface and increased toward a surface portion of the steel sheet. A diameter (BW) of the groove in a rolling direction is 10 µm to 70 µm, and a length (BL) of the groove in a width direction of the steel sheet is 10 µm to 150 µm.

However, in Patent Document 4, the description of a shape of the solidified portion is only a difference in thickness between the bottom surface and the surface, and it is not assumed that a surface area is increased by the projection inside the groove and the eddy-current loss is reduced accordingly. Accordingly, Patent Document 4 has a problem that a sufficient reduction effect of the iron loss cannot be obtained.

### Citation List

### Patent Document

Patent Document 1: Japanese Patent No. 4669565
Patent Document 2: Japanese Unexamined Patent Application, First Publication No. H06-57335
Patent Document 3: Japanese Patent No. 7010311
Patent Document 4: Japanese Patent No. 6307441

### SUMMARY OF INVENTION

### Technical Problem

As described above, in the related art, it cannot be said that the effect is sufficient for a higher demand for the iron loss reduction in recent years.

In view of the above circumstances, an object of the present inventors is to provide a grain-oriented electrical steel sheet having a low iron loss on the premise of a grain-oriented electrical steel sheet in which a groove is formed by laser irradiation and a magnetic domain is refined, and a manufacturing method therefor.

### Solution to Problem

The present inventors have studied the iron loss reduction by reducing the eddy-current loss in the method for manufacturing the grain-oriented electrical steel sheet in which the groove is formed by the laser irradiation to refine the magnetic domain.

As a result, it has been found that the eddy-current loss is reduced by intentionally forming a projection having a predetermined shape inside the groove. In addition, it has been found that the iron loss reduction effect is further enhanced by controlling the crystal orientation of the projection.

In addition, it has been found that laser irradiation conditions and injection conditions of an assist gas greatly affect the formation of the projection inside the groove.

The present invention has been made in view of the above findings. The gist of the present invention is as follows.
[1] A grain-oriented electrical steel sheet according to an aspect of the present invention includes a steel sheet having a surface in which a plurality of grooves extending in a direction intersecting a rolling direction and having a depth in a sheet thickness direction are formed. In a cross section of the steel sheet parallel to the rolling direction and parallel to the sheet thickness direction, at least one projection is present on a side surface or a bottom surface of the groove, the projection has a maximum height of 2 to 50 µm and a maximum width of 2 to 50 µm, and the orientation difference between the average crystal orientation of the projection and a Goss orientation is 10 degrees or more.
[2] In the grain-oriented electrical steel sheet according to [1], when a distance from an inlet portion of the groove to an opposite inlet portion of the groove in the cross section is defined as a width of the groove and a region equivalent to the width of the groove from the inlet portion of the groove of the steel sheet in a direction opposite to a center of the groove in the rolling direction is defined as a groove edge portion, the projection at the groove edge portion may have a maximum height of 5 µm or less and a maximum width of 5 µm or less.
[3] In the grain-oriented electrical steel sheet according to [1] or [2], a forsterite film may be formed on the surface of the steel sheet.
[4] In the grain-oriented electrical steel sheet according to [3], an insulating coating may be formed on a surface of the forsterite film.
[5] In the grain-oriented electrical steel sheet according to [1] or [2], an insulating coating may be formed on the surface of the steel sheet.
[6] A method for manufacturing a grain-oriented electrical steel sheet according to another aspect of the present invention is a method for manufacturing the grain-oriented electrical steel sheet according to [1] or [2]. The method includes hot rolling step of heating and hot rolling a slab to form a hot rolled sheet, a hot rolled sheet annealing step of annealing the hot rolled sheet after the hot rolling step, a cold rolling step of pickling and cold rolling the hot rolled sheet after the hot rolled sheet annealing step to form a steel sheet, a decarburization annealing step of performing decarburization annealing on the steel sheet, a final annealing step of applying an annealing separator to the steel sheet after the decarburization annealing step and performing final annealing, and a groove forming step of forming a groove in the surface of the steel sheet by performing laser irradiation on the surface of the steel sheet and forming a projection on a side surface or a bottom surface of the groove between the cold rolling step and the final annealing step. The groove forming step includes a first stage of irradiating a portion with a laser having a laser output of 200 to 3000 W, having a condensed spot diameter of 10 to 1000 µm, which is a diameter including 86% of the laser output in a rolling direction, and having a condensed spot diameter of 10 to 1000 µm in a sheet width direction, at a scanning speed of 2 to 50 m/s, and spraying an assist gas having a flow rate of 1 to 500 L/min, and a second stage of irradiating the same portion as the portion irradiated with the laser in the first stage with a laser having a laser output of 10 to 150 W, having a condensed spot diameter of 10 to 1000 µm in the rolling direction, and having a condensed spot diameter of 10 to 1000 µm in the sheet width direction at a scanning speed of 2 to 50 m/s.
[7] The method for manufacturing a grain-oriented electrical steel sheet according to [6] may further include a grinding step of grinding the surface of the steel sheet after the groove forming step by using a brush roll to which abrasive grains are fixed. In the grinding step, the brush roll rotates in a direction facing a transfer direction of the steel sheet at a position where the brush roll abuts on the steel sheet, a transfer speed of the steel sheet is 5 to 100 mpm, a rotation speed of the brush roll is 500 to 2000 rpm, a rolling reduction of the brush roll is 2 to 10 mm, the abrasive grains have a grain size of #40 to #400, and a diameter of the brush roll is 200 to 500 mm. Advantageous Effects of Invention

According to the above aspects of the present invention, it is possible to provide the grain-oriented electrical steel sheet having the low iron loss and the manufacturing method therefor.

### BRIEF DESCRIPTION OF DRAWINGS

[FIG. 1] A diagram illustrating an example of a state where a groove of a grain-oriented electrical steel sheet according to the present embodiment is formed.
[FIG. 2] A schematic view of the groove and a projection inside the groove of the grain-oriented electrical steel sheet according to the present embodiment as viewed in a cross section orthogonal to an extending direction of the groove.
[FIG. 3] A schematic view of the groove and the projection at a groove edge portion of the grain-oriented electrical steel sheet according to the present embodiment as viewed in the cross section orthogonal to the extending direction of the groove.

### DESCRIPTION OF EMBODIMENTS

Hereinafter, a grain-oriented electrical steel sheet according to an embodiment of the present invention (grain-oriented electrical steel sheet according to the present embodiment) and a manufacturing method therefor will be described.

### <Grain-oriented electrical steel sheet>

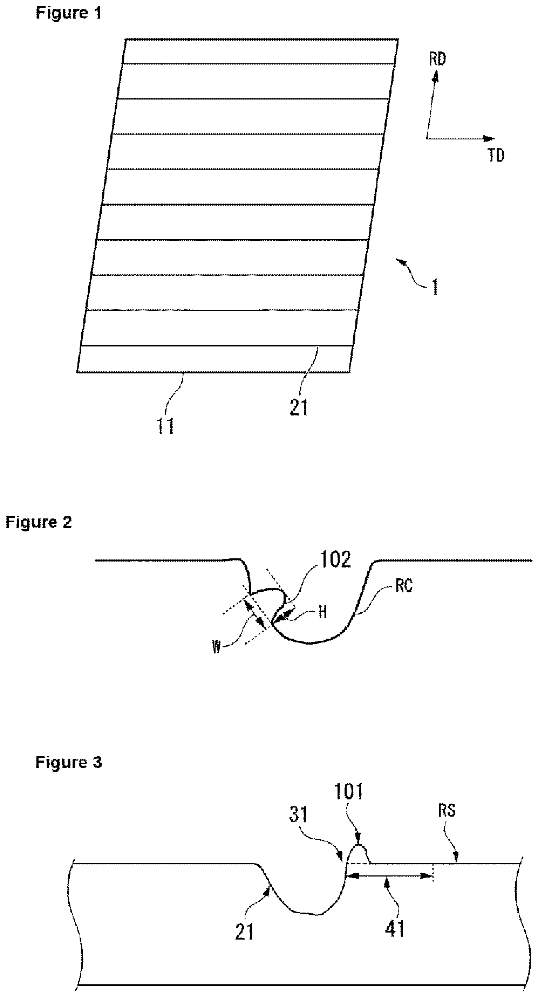

As illustrated in FIG. 1, a grain-oriented electrical steel sheet 1 according to the present embodiment includes a steel sheet 11 having a surface in which a plurality of grooves 21 extending in a direction intersecting a rolling direction RD and having a depth in a sheet thickness direction is formed. The steel sheet 11 is, for example, a cold rolled sheet subjected to cold rolling.

A forsterite film or an insulating coating may be formed on the surface of the steel sheet 11.

In addition, the insulating coating may be formed on a surface of the forsterite film.

That is, the grain-oriented electrical steel sheet according to the present embodiment may be made of not only a steel sheet (base steel sheet) but also a base steel sheet and a forsterite film formed on a surface of the base steel sheet, may be made of a base steel sheet and an insulating coating formed on a surface of the base steel sheet, or may be made of a base steel sheet, a forsterite film formed on a surface of the base steel sheet, and an insulating coating formed on a surface of the forsterite film.

The forsterite film and the insulating coating may be formed on one surface or may be formed on both surfaces.

Hereinafter, both the above cases will be described.

### [Steel sheet (base steel sheet)]

### (Groove)

As illustrated in FIG. 1, the steel sheet 11 has the plurality of grooves 21 formed by laser irradiation, extending in the direction intersecting the rolling direction RD and having the depth in the sheet thickness direction in the surface thereof.

Magnetic domain refinement can be performed by periodically forming linear grooves in the direction intersecting the rolling direction RD. In the grain-oriented electrical steel sheet according to the present embodiment, in order to obtain this effect, the grooves 21 are formed in the surface of the steel sheet 11 (in the grain-oriented electrical steel sheet on which the forsterite film or the insulating coating is formed, a so-called base steel sheet excluding the forsterite film or the insulating coating).

Here, the direction intersecting the rolling direction RD is a direction of 60 to 120° with respect to the rolling direction RD.

The shape of the groove 21 is not limited as long as the effect of the magnetic domain refinement can be obtained, but a depth is preferably 10 to 50 µm and a width is preferably 10 to 200 µm. Among the plurality of grooves, an interval between adjacent grooves in the rolling direction RD is preferably 1 to 20 mm. The plurality of grooves 21 are preferably formed at substantially regular intervals (periodically) in the rolling direction RD. The interval between the grooves is a distance from a center of the groove in a width direction to a center of an adjacent groove in the width direction.

### (Projection inside groove)

In the grain-oriented electrical steel sheet according to the present embodiment, in a cross section parallel to the rolling direction and parallel to the sheet thickness direction, at least one projection is present inside the groove (a side surface or a bottom surface of the groove), and the maximum height of the projection is 2 to 50 µm and the maximum width of the projection is 2 to 50 µm.

A surface area inside the groove is increased by forming at least one or more projections on the bottom surface and the side surface of the groove and setting the width of the projection to 2 to 50 µm and the height of the projection to 2 to 50 µm. Due to an increase in the surface area inside the groove, the amount of leakage magnetic flux from the inside of the groove when the grain-oriented electrical steel sheet is magnetized increases, and electrostatic energy increases. Since a magnetic domain is further refined in order to cancel the increase in the electrostatic energy, an eddy-current loss is reduced.

When the projection is not present or the height or width of the projection is less than 2 µm, the surface area inside the groove is not sufficiently increased, and the eddy-current loss is not reduced. On the other hand, when the width or height of the projection exceeds 50 µm, since the projection is larger than the groove depth or width, the projection protrudes to the sheet surface. In this case, since a gap is generated when steel sheets are laminated, an iron loss increases. When there is a plurality of projections, evaluation is performed with the maximum height and the maximum width.

The maximum height and width of each of the projections are preferably 5 to 50 µm and more preferably 10 to 50 µm.

In a crystal orientation of the projection inside the groove described above, an orientation difference between an average crystal orientation of the projection and a Goss orientation is 10 degrees or more. By setting the orientation difference between the average crystal orientation of the projection and the Goss orientation to 10 degrees or more, a magnetic domain refinement effect is further enhanced.

The determination as to whether or not at least one projection is present on the side surface or the bottom surface of the groove and the measurement of the height and width of the projection can be performed by the following methods.

A cross-sectional shape of the groove is usually a Gaussian function or a shape close thereto. This is because a strength distribution of a laser usually follows a Gaussian distribution. As illustrated in FIG. 2, an imaginary line in a case where the cross-sectional shape of the groove 21 is assumed to be the Gaussian function is defined as a reference curve RC, and a region having a width (W in FIG. 2) of 1 µm or more and a protrusion height from the reference curve RC (height in a direction perpendicular to a tangent at the position): H of 1 µm or more is defined as a projection 102. The height (protrusion height) H of the projection 102 is a height from the reference curve RC to a vertex of the projection. The width W of the projection is a straight line distance from one end portion to the other end portion of the projection at a position of a bottommost surface of the projection. A method for measuring the height and width of the projection is as follows.

First, a sample is collected from the grain-oriented electrical steel sheet to be measured such that a cross section in a sheet thickness direction orthogonal to a longitudinal direction (extending direction) of the groove is exposed. The cross section is polished, and thus, a cross section including the groove and a peripheral portion thereof shown in FIG. 2 is exposed, and then the cross section is observed with an optical microscope or a scanning electron microscope. According to the above, the presence or absence, the height, and the width of the projection are measured.

The cross section is observed at 10 or more points, and in a case where at least one projection (a region protruding with a width of 1 µm or more and a height of 1 µm or more from the reference curve) is present on the side surface or the bottom surface of the groove, it is determined that at least one projection is present. In a case where there are a plurality of projections, the maximum height and the maximum width of each projection are used as measurement values.

In addition, the orientation difference between the average crystal orientation of the projection and the Goss orientation can be measured by the following method.

First, a sample is collected from the grain-oriented electrical steel sheet to be measured such that a cross section orthogonal to the longitudinal direction (extending direction) of the groove is exposed. The cross section is polished, and thus, the cross section including the groove and the peripheral portion thereof shown in FIG. 2 is exposed, and then the cross section is observed. The crystal orientation is measured by an electron back scattering diffraction pattern (EBSD) method under conditions to be described later. In a region measured by the EBSD, a region having a width of 1 µm or more and protruding from the reference curve by a height of 1 µm or more is defined as a projection, and an average crystal orientation of the projection is obtained. An orientation difference between the obtained average crystal orientation and the Goss orientation is obtained. In a case where there are a plurality of projections, among orientation differences between the average crystal orientations of the projections and the Goss orientations, a maximum orientation difference is defined as the orientation difference between the average crystal orientation of the projection and the Goss orientation.

Measurement conditions of EBSD are as follows.
(a) Measurement apparatus: FE-SEM "SU-70" (manufactured by Hitachi High-Tech Corporation)
   EBSD apparatus "DigiView" (manufactured by TSL Solutions)
(b) Magnification: 500 times
(c) Step interval: 0.25 µm
(d) Measurement region: 200 µm in direction intersecting longitudinal groove direction × 70 µm in sheet thickness direction

### (Groove edge portion (flat portion around groove))

As shown in FIG. 3, in the cross section parallel to the rolling direction RD and parallel to the sheet thickness direction, when the distance from an inlet portion 31 of the groove (a position where the side surface of the groove having a concave shape with respect to the reference plane intersects the imaginary line extending the reference plane) to an opposite inlet portion of the groove is defined as the width of the groove, and a region equivalent to the width of the groove 21 in a direction opposite to the center of the groove 21 in the rolling direction RD from the inlet portion 31 of the groove of the steel sheet 11 is defined as a groove edge portion 41 (although only a right side of the groove is described in FIG. 3, the same applies to a left side), it is preferable that the maximum height of a projection of the groove edge portion 41 is 5 µm or less and the maximum width is 5 µm or less.

When the projection is formed not inside the groove but around the groove (particularly, the groove edge portion to which a melt is often attached), a gap is generated in a laminated portion when grain-oriented electrical steel sheets are laminated. Thus, a magnetic flux hardly flows, and an iron loss increases. In particular, in a case where the maximum height or width of the projection is more than 5 µm, an adverse effect is large. The projection at the groove edge portion is preferably small and more preferably removed.

The height and width of the projection at the groove edge portion can be obtained by the following method.

As illustrated in FIG. 3, a sheet surface in a region separated from the inlet portion 31 of the groove by the width of the groove or more in the direction opposite to the center of the groove in the rolling direction RD (that is, a region farther from the groove than the groove edge portion) is defined as a reference plane RS, and a region protruding from the reference plane by a width of 1 µm or more and a height of 1 µm or more is defined as a projection 101. The height of the projection 101 is a height from the reference plane RS to a vertex of the projection 101. The width of the projection 101 is a straight line distance from one end portion to the other end portion of the projection 101.

For the height and width of the projection 101, first, a sample is collected from the grain-oriented electrical steel sheet to be measured such that a cross section orthogonal to the longitudinal direction of the groove is exposed. At this time, the sample is collected so that the cross section includes a region equivalent to the width of the groove in the direction opposite to the center of the groove from an edge of the groove. The cross section is polished, and thus, the cross section including the groove 21 and the peripheral portion thereof (groove edge portion 41) shown in FIG. 3 is exposed, and then the cross section is observed with an optical microscope or a scanning electron microscope. According to the above, the height and the width of the projection 101 are measured. The cross section is observed at 10 or more points, and in a case where there are a plurality of projections, the maximum value of a projection height and the maximum value of a width of each projection are used as measurement values.

### (Chemical composition)

A chemical composition of the steel sheet (base steel sheet) is not limited as long as a chemical composition thereof is equivalent to a chemical composition of a base steel sheet of a known grain-oriented electrical steel sheet. For example, Si: 2.5 to 4.5%, Mn: 0.01 to 0.15%, C: 0 to 0.085%, acid-soluble Al: 0 to 0.065%, N: 0 to 0.012%, Cr: 0 to 0.30%, Cu: 0 to 0.40%, P: 0 to 0.50%, Sn: 0 to 0.30%, Sb: 0 to 0.30%, Ni: 0 to 1.000%, S: 0 to 0.015%, Se: 0 to 0.015%, and Bi: 0 to 0.02% in mass% can be contained as the chemical composition. In addition, the grain-oriented electrical steel sheet may contain the above-described chemical composition and the remainder of Fe and impurities.

**In** a case where the grain-oriented electrical steel sheet is made of the base steel sheet (case where the forsterite film and the insulating coating are not included), it can be said that the chemical composition of the base steel sheet is the chemical composition of the grain-oriented electrical steel sheet.

The chemical composition of the steel sheet (base steel sheet) may be measured by a general analysis method of steel. For example, the chemical component of the base steel sheet may be measured by inductively coupled plasma-atomic emission spectrometry (ICP-AES). Specifically, for example, the chemical composition can be specified by acquiring a test piece of 35 mm square (35 mm in the rolling direction and the width direction) from a center position in a width direction of the base steel sheet after removal of a coating, and performing measurement under a condition based on a calibration curve created in advance using ICPS-8100 manufactured by Shimadzu Corporation or the like (measurement apparatus). C and S may be measured by a combustion-infrared absorption method, and N may be measured by an inert gas melting-thermal conductivity method. In a case where the forsterite film and the insulating coating to be described later are formed, the chemical component of the base steel sheet may be analyzed after removing the forsterite film and the insulating coating from the grain-oriented electrical steel sheet by a known method such as pickling.

### (Sheet thickness)

A sheet thickness of the base steel sheet of the grain-oriented electrical steel sheet according to the present embodiment is not limited, but is preferably, for example, 0.15 to 0.35 mm from the viewpoint that the eddy-current loss is reduced as the sheet thickness becomes thinner.

### [Forsterite film]

In the grain-oriented electrical steel sheet according to the present embodiment, the forsterite film may be formed on the surface of the base steel sheet.

The forsterite film is an inorganic coating containing magnesium silicate as a main component. The forsterite film is formed by reaction of an annealing separator containing magnesia (MgO) applied to the surface of the base steel sheet with a component of the surface of the base steel sheet in final annealing, and has a composition (more specifically, a composition containing Mg₂SiO₄ as a main component) derived from the annealing separator and the component of the base steel sheet.

On the other hand, in a case where an annealing separator mainly containing Al₂O₃ is used in the final annealing, the forsterite film may not be formed.

### [Insulating coating]

In the grain-oriented electrical steel sheet according to the present embodiment, the insulating coating may be formed on the surface of the base steel sheet or the surface of the forsterite film.

The insulating coating imparts electrical insulation properties to the grain-oriented electrical steel sheet to reduce the eddy-current loss, and thus, the iron loss of the grain-oriented electrical steel sheet is reduced. The insulating coating has a function of applying a tension to the grain-oriented electrical steel sheet. The tension is applied to the grain-oriented electrical steel sheet to facilitate domain wall movement in the grain-oriented electrical steel sheet, and thus, the iron loss of the grain-oriented electrical steel sheet can be improved.

In addition, according to the insulating coating, various properties such as corrosion resistance, heat resistance, and slippage can be obtained in addition to the electrical insulation properties as described above.

In the grain-oriented electrical steel sheet according to the present embodiment, the insulating coating may be, for example, a known coating formed by applying a coating solution containing phosphate and colloidal silica as main components to the surface of the forsterite film and baking the coating solution.

### <Manufacturing method>

An effect of the grain-oriented electrical steel sheet according to the present embodiment can be obtained regardless of the manufacturing method as long as the grain-oriented electrical steel sheet has the above-described characteristics, but a manufacturing method including the following steps is preferable as long as such a manufacturing method enables stable manufacture.
(I) A hot rolling step of heating and hot rolling a slab to form a hot rolled sheet,
(II) A hot rolled sheet annealing step of annealing the hot rolled sheet after the hot rolling step,
(III) A cold rolling step of pickling and cold rolling the hot rolled sheet after the hot rolled sheet annealing step to obtain a steel sheet (cold rolled sheet),
(IV) A decarburization annealing step of performing decarburization annealing on the steel sheet,
(V) A final annealing step of applying an annealing separator to the steel sheet after the decarburization annealing step and performing final annealing, and
(VI) A groove forming step of forming a groove on a surface of the steel sheet by performing laser irradiation on the surface of the steel sheet between the cold rolling step and the final annealing step.

**In** addition, the grain-oriented electrical steel sheet according to the present embodiment may further include one or more of the following steps.
(VII) A nitriding treatment step of increasing a nitrogen content of the steel sheet after the decarburization annealing step,
(VIII) A grinding step of grinding the surface of the steel sheet after the groove forming step, and
(IX) An insulating coating forming step of forming an insulating coating on the surface of the steel sheet after the final annealing step (or the surface of the forsterite film formed on the surface of the steel sheet).

### [Hot rolling step]

In the hot rolling step, the slab having a predetermined chemical composition (a chemical composition corresponding to the chemical composition of the base steel sheet of the grain-oriented electrical steel sheet according to the present embodiment) is heated and hot rolled to form the hot rolled sheet.

The condition is not limited, and for example, a heating temperature is 1050 to 1400°C.

The chemical composition of the slab to be subjected to the hot rolling may be determined in consideration of a change in the chemical composition in each step in accordance with the chemical composition desired to be obtained as the grain-oriented electrical steel sheet.

For example, in a case where the preferred chemical composition of the base steel sheet of the grain-oriented electrical steel sheet according to the present embodiment described above, it is preferable to use the slab having the following chemical composition.

That is, the slab can contain, as the chemical composition, Si: 2.5 to 4.5%, Mn: 0.01 to 0.15%, C: 0.02 to 0.10%, acid-soluble Al: 0 to 0.065%, N: 0.002 to 0.030%, Cr: 0 to 0.30%, Cu: 0 to 0.40%, P: 0 to 0.50%, Sn: 0 to 0.30%, Sb: 0 to 0.30%, Ni: 0 to 1.000%, S: 0.001 to 0.050%, Se: 0 to 0.050%, and Bi: 0 to 0.02% in mass%. In addition, the grain-oriented electrical steel sheet may contain the above-described chemical composition and the remainder of Fe and impurities..

A method for obtaining the slab is not limited. For example, molten steel having a predetermined chemical composition **may be melted** and manufactured by using the molten steel. The slab may be manufactured by a continuous casting method, or an ingot may be manufactured by using the molten steel, and the slab may be manufactured by blooming-rolling the ingot. In addition, the slab may be manufactured by other methods.

A thickness of the slab is not particularly limited, and is, for example, 150 to 350 mm. The thickness of the slab is preferably 220 to 280 mm. A so-called thin slab having a thickness of 10 to 70 mm may be used.

### [Hot rolled sheet annealing step]

In the hot rolled sheet annealing step, the hot rolled sheet after the hot rolling step is annealed. By performing such an annealing treatment, recrystallization occurs in the metallographic structure, and favorable magnetic characteristics can be realized.

In the hot rolled sheet annealing step of the present embodiment, the hot rolled sheet manufactured through the hot rolling step may be annealed according to a known method. A technique for heating the hot rolled sheet at the time of annealing is not particularly limited, and a known heating method can be adopted. In addition, annealing conditions are also not particularly limited, but for example, the hot rolled sheet can be annealed in a temperature range of 900 to 1200°C for 10 seconds to 5 minutes.

### [Cold rolling step]

In the cold rolling step, the steel sheet (cold rolled sheet) is obtained by pickling and cold-rolling the hot rolled sheet after the hot rolled sheet annealing step. The cold rolling may be one time of cold rolling (a series of cold rolling without intermediate annealing). Before a final pass of the cold rolling step, cold rolling may be interrupted, at least one or more times of intermediate annealing may be performed, and a plurality of times of cold rolling may be performed with intermediate annealing interposed therebetween.

Conditions for the cold rolling may be in accordance with a known method. For example, a final rolling reduction can be in a range of 80% or more and 95% or less.

The final rolling reduction is a cumulative rolling reduction of cold rolling, and when intermediate annealing is performed, the final rolling reduction is a cumulative rolling reduction of cold rolling after the final intermediate annealing.

In a case where the intermediate annealing is performed, it is preferable to hold the intermediate annealing at a temperature of 1000 to 1200°C for 5 to 180 seconds. An annealing atmosphere is not particularly limited. The number of times of intermediate annealing is preferably three or less in consideration of manufacturing cost.

In addition, pickling may be performed under known conditions.

### [Decarburization annealing step]

In the decarburization annealing step, the steel sheet (cold rolled sheet) is subjected to the decarburization annealing. In this decarburization annealing, carbon that adversely affects magnetic characteristics is removed (decarburized) from the steel sheet, and the steel sheet is primarily recrystallized.

Although the decarburization annealing conditions are not limited, for example, conditions can be a condition that the steel sheet is heated at 700 to 900°C for 1 to 3 minutes.

### [Nitriding treatment step]

After the decarburization annealing step and before the final annealing step, the nitriding treatment for increasing the nitrogen content of the grain-oriented electrical steel sheet may be performed. The nitriding treatment may be performed by a known method, and for example, nitrogen is infiltrated into the steel by annealing in an atmosphere containing a gas having nitriding ability such as ammonia. Thus, an inhibitor of secondary recrystallization can be nitrided.

### [Groove forming step]

In the groove forming step, the groove is formed in the surface of the steel sheet by performing laser irradiation on the surface of the steel sheet (cold rolled sheet). In addition, at the same time, the projection is formed in the groove (side surface or bottom surface). In addition, the crystal orientation of the projection is also controlled.

The groove forming step and the subsequent grinding step performed as necessary are performed between the cold rolling step and the final annealing step, that is, between the cold rolling step and the decarburization annealing step, between the decarburization annealing step and the final annealing step, between the nitriding treatment step and the final annealing step, or the like.

In the groove forming step, the laser irradiation is performed in two stages of a first stage and a second stage in order to form the projection together with the formation of the groove.

At that time, in the ^{f}irst stage, it is necessary to control laser irradiation conditions and injection conditions of the assist gas for removing the melt generated by the laser irradiation from the surface by the assist gas. In the second stage, it is necessary to control the laser irradiation conditions.

Specifically, in the first stage, in the laser irradiation, a laser having a laser output of 200 to 3000 W, having a condensed spot diameter in the rolling direction (that is, a diameter including 86% of the laser output) of 10 to 1000 µm, and having a condensed spot diameter in the sheet width direction (that is, a diameter including 86% of the laser output) of 10 to 1000 µm is irradiated at a scanning speed of 2 to 50 m/s, and at the same time, an assist gas having a flow rate of 1 to 500 L/min is sprayed. By performing the laser irradiation and the spraying of the assist gas under the above conditions, the groove is formed in the surface of the steel sheet, and the projection having a predetermined size is formed in the groove (side surface or bottom surface).

In the second stage, the same portion as the portion irradiated with the laser in the first stage is irradiated with the laser having the laser output of 10 to 150 W, the condensed spot diameter in the rolling direction of 10 to 1000 µm, and the condensed spot diameter in the sheet width direction of 10 to 1000 µm at the scanning speed of 2 to 50 m/s.

By performing the laser irradiation under the above conditions subsequent to the first stage, the orientation difference between the average crystal orientation of the projection and the Goss orientation can be 10 degrees or more.

In the first stage, when the laser output is less than 200 W, since the generation of the melt is not sufficient, only a projection smaller than a preferable shape is formed or a projection is not formed inside the groove. On the other hand, when the laser power exceeds 3000 W, since the laser output is too strong, the melt is excessively generated, and a projection larger than the preferable shape is formed inside the groove.

In addition, when the condensed spot diameter of the laser in the rolling direction and the width direction is less than 10 µm, a groove having the preferable shape is not formed, and the projection formed inside the groove is smaller than the preferable shape. Thus, the iron loss reduction effect cannot be obtained. On the other hand, when the condensed spot diameter exceeds 1000 µm, a groove having a preferable shape is not formed, and a projection formed inside the groove is larger than the preferable shape. Thus, the iron loss reduction effect cannot be obtained.

In addition, when the scanning speed is less than 2 m/s, the melt is excessively generated, and the projection larger than the preferable shape is formed inside the groove. On the other hand, when the scanning speed is more than 50 m/s, since the generation of the melt is not sufficient, only the projection smaller than the preferable shape is formed or the projection is not formed inside the groove.

When the flow rate of the assist gas is less than 1 L/min, the melt is not sufficiently removed, and the projection larger than the preferable shape is formed inside the groove. On the other hand, when the flow rate exceeds 500 L/min, since the melt is excessively removed, only the projection smaller than the preferable shape is formed or the projection is not formed inside the groove.

Preferably, the laser output is 500 to 3000 W, the condensed spot diameter of the laser in the rolling direction (that is, the diameter including 86% of the laser output) is 10 to 500 µm, the condensed spot diameter of the laser in the sheet width direction (that is, the diameter including 86% of the laser output) is 10 to 500 µm, the laser scanning speed is 5 to 50 m/s, and the flow rate of the assist gas is 1 to 200 L/min.

In the second stage, when the laser output is less than 10 W, since the projection is not sufficiently heated, the effect cannot be obtained. On the other hand, when the heating temperature exceeds 150 W, the projection is melted.

When **the condensed** spot diameter of the laser in the rolling direction and the width direction is less than 10 µm, since a laser output per unit area is too high, the projection is melted. On the other hand, when the condensed spot diameter exceeds 1000 µm, a portion other than the projection is also heated, this condensed spot diameter is not preferable.

In consideration of production efficiency, the scanning speed is preferably about the same as in the ^{f}irst stage. However, when the scanning speed is within a range of 2 to 50 m/s, since it is sufficient for heating the projection, the scanning speed may be appropriately changed within the above range.

The reason why the crystal orientation of the projection can be controlled by the laser irradiation is assumed as follows.

The laser irradiation causes recrystallization and grain growth near the projection. Alternatively, since thermal strain is applied, recrystallization and grain growth occur before the decarburization annealing or the final annealing which are the subsequent step (before the start of secondary recrystallization) by using the strain as a driving force, and matrix grains become coarse as compared with the matrix grains before secondary recrystallization (grains consumed by secondary recrystallized grains). Since the coarse grains are hardly consumed by the secondary recrystallized grains and have a random orientation, the orientation difference from the Goss orientation is large. Accordingly, the orientation difference between the average crystal orientation of the projection and the Goss orientation can be 10 degrees or more.

### [Grinding step]

In the grinding step, the surface of the steel sheet (cold rolled sheet) after the groove forming step is ground by using a brush roll to which abrasive grains are fixed. Thereby, it is possible to reduce the height of the projection of the flat portion of the groove edge portion (around the groove) or to remove the projection.

In a case where grinding is performed, the brush roll is controlled to rotate in a direction facing a transfer direction of the steel sheet at a position where the brush roll abuts on the steel sheet, and the grinding is performed under the conditions that the transfer speed (line speed) of the steel sheet is 5 to 100 meter per minutes (mpm), the rotation speed of the brush roll is 500 to 2000 rpm, the rolling reduction of the brush roll is 2 to 10 mm, the grain size of the abrasive grains is #40 to #400, and the diameter of the brush roll is 200 to 500 mm.

A sufficient effect cannot be obtained outside the above range.

As the grinding conditions, preferably, the transfer speed of the steel sheet is 5 to 100 mpm, the rotation speed of the brush roll is 1000 to 2000 rpm, the rolling reduction of the brush roll is 4 to 10 mm, the grain size of the abrasive grains is #40 to #100, and the diameter of the brush roll is 200 to 500 mm. In this case, an effect of removing the projection at the groove edge portion is enhanced.

### [Final annealing step]

In the final annealing step, the annealing separator is applied to the steel sheet after the decarburization annealing step, and the final annealing is performed.

Since the final annealing is performed after the steel sheet is coiled into a coil shape, the annealing separator is applied during the final annealing such that the steel sheet is not baked. In general, an annealing separator mainly containing MgO or Al₂O₃ is used. The final annealing is performed after applying such an annealing separator. For example, when the annealing separator containing MgO as the main component is used, a forsterite (Mg₂SiO₄) coating layer is formed. In a case where the annealing separator containing Al₂O₃ as the main component is used, the forsterite film may not be formed.

In addition, in the final annealing step, primary recrystallized grains obtained in the decarburization annealing step are secondarily recrystallized by heating to an annealing temperature to obtain crystal grains aligned in the Goss orientation, and impurities (N, S, and the like) that adversely affect the magnetic characteristics are removed (purified) by holding the crystal grains at the annealing temperature for a predetermined time.

The conditions for the final annealing are not limited, but for example, conditions of being heated to 1100 to 1300°C and held for 20 to 24 hours may be used.

### [Insulating coating forming step]

In the insulating coating forming step, the insulating coating is formed on the steel sheet (or on the surface of the forsterite film in a case where the forsterite film is formed on the surface of the steel sheet by the final annealing) after the final annealing step.

For example, the insulating coating can be formed by applying a coating solution containing phosphoric acid or a phosphate, colloidal silica, and chromic anhydride or a chromate to the steel sheet (including the steel sheet having the forsterite film) after the final annealing, baking the coating solution at 300 to 950°C for 10 seconds or more and drying the coating solution.

Through these steps, it is possible to obtain the grain-oriented electrical steel sheet including the base steel sheet and the forsterite film and/or the insulating coating as necessary.

### Examples

A hot rolled sheet having a sheet thickness of 2.6 mm was obtained by performing the hot rolling step on a slab having a chemical composition containing Si: 3.3%, C: 0.060%, acid-soluble Al: 0.028%, N: 0.008%, Mn: 0.12%, Cr: 0.05%, Cu: 0.04%, P: 0.01%, Sn: 0.02%, Ni: 0.005%, and S: 0.007% in mass fraction with the remainder being Fe and impurities.

The hot rolled sheet was hot rolled sheet annealed under the conditions of being heated to 1000°C and held for 1 minute.

A steel sheet (cold rolled sheet) having a thickness of 0.23 mm was obtained by pickling and cold-rolling the hot rolled sheet after the hot rolled sheet annealing.

A groove extending with respect to a direction of 90° in the rolling direction was formed in the surface by performing laser irradiation on the steel sheet under conditions shown in Tables 1A and 1 B. In addition, a plurality of grooves were formed at intervals of 5 mm in the rolling direction so as to be parallel to each other.

The surface of the steel sheet in which the groove was formed was ground under the conditions shown in Table 2 by using the brush roll rotating in the direction facing the transfer direction of the steel sheet.

After grinding, the decarburization annealing was performed under the conditions of being heated to 800°C and held for 2 minutes.

An annealing separator containing magnesia (MgO) as a main component was applied to the steel sheet after the decarburization annealing, and the final annealing was performed on the steel sheet under the conditions of being heated to 1200°C and held for 20 hours. As a result, the grain-oriented electrical steel sheet in which the forsterite film was formed on the surface of the steel sheet (base steel sheet) was obtained.

The insulating coating was formed by applying a coating solution containing colloidal silica and a phosphate to the obtained grain-oriented electrical steel sheet and performing heat treatment under conditions of being heated to 850°C and held for 1 minute.

The chemical composition of the base steel sheet of the obtained grain-oriented electrical steel sheet was obtained, and it was found that the base steel sheet contained Si: 3.3%, C: 0.001 % or less, acid-soluble Al: 0.004% or less, N: 0.001% or less, Mn: 0.12%, Cr: 0.05%, Cu: 0.04%, P: 0.01%, Sn: 0.02%, Ni: 0.005%, and S: 0.001% or less in mass fraction, with the remainder being Fe and impurities.

A sample was collected from the obtained grain-oriented electrical steel sheet by the manners described above, and the presence or absence of the projection in the groove and the groove edge portion, the maximum height and the maximum width of the projection, and the orientation difference between the average crystal orientation of the projection in the groove and the GOSS orientation were measured.

Table 3 shows the results.

A test piece was collected by shearing the obtained grain-oriented electrical steel sheet to a width of 30 mm and a length of 320 mm. A length of the test piece was set to be parallel to the rolling direction. An Epstein test was performed on the collected test piece in accordance with JIS C2550-1 (2011) to measure an iron loss W 17/50 at a frequency of 50 Hz and a maximum magnetic flux density of 1.7 T.

When W17/50 was 0.750 W/kg or less, it was determined that a low iron loss was obtained.

Table 3 shows the results.

**[Table 1A]**

| Note | Groove forming step | | | | |
|---|---|---|---|---|---|
| | Laser irradiation-assist gas injection conditions (first stage) | | | | |
| | Laser output [W] | Rolling direction spot diameter [µm] | Sheet width direction spot diameter [µm] | Scanning speed [m/s] | Assist gas flow rate [L/min] |
| Invention Example 1 | 1500 | 40 | 40 | 45 | 100 |
| Invention Example 2 | 1500 | 40 | 40 | 45 | 100 |
| Invention Example 3 | 2800 | 40 | 40 | 45 | 100 |
| Invention Example 4 | 300 | 40 | 40 | 45 | 100 |
| Invention Example 5 | 1500 | 40 | 40 | 3 | 100 |
| Invention Example 6 | 1500 | 40 | 40 | 45 | 10 |
| Invention Example 7 | 1500 | 40 | 40 | 40 | 450 |
| Invention Example 8 | 1500 | 20 | 20 | 40 | 100 |
| Invention Example 9 | 1500 | 800 | 800 | 40 | 100 |
| Invention Example 10 | 1500 | 40 | 40 | 45 | 100 |
| Invention Example 11 | 1500 | 40 | 40 | 45 | 100 |
| Invention Example 12 | 1500 | 40 | 40 | 45 | 100 |
| Invention Example 13 | 1500 | 40 | 40 | 45 | 100 |
| Invention Example 14 | 1500 | 40 | 40 | 45 | 100 |
| Invention Example 15 | 1500 | 40 | 40 | 45 | 100 |
| Invention Example 16 | 1500 | 40 | 40 | 45 | 100 |
| Invention Example 17 | 1500 | 40 | 40 | 45 | 100 |
| Invention Example 18 | 1500 | 40 | 40 | 45 | 100 |
| Invention Example 19 | 1500 | 40 | 40 | 45 | 100 |
| Invention Example 20 | 1500 | 40 | 40 | 45 | 100 |
| Invention Example 21 | 1500 | 40 | 40 | 45 | 100 |
| Comparative Example 1 | 1500 | 40 | 40 | 45 | 600 |
| Comparative Example 2 | 1500 | 40 | 40 | 45 | 0 |
| Comparative Example 3 | 100 | 40 | 40 | 45 | 100 |
| Comparative Example 4 | 3500 | 40 | 40 | 45 | 100 |
| Comparative Example 5 | 1500 | 5 | 10 | 45 | 100 |
| Comparative Example 6 | 1500 | 10 | 5 | 45 | 100 |
| Comparative Example 7 | 1500 | 1100 | 900 | 45 | 100 |
| Comparative Example 8 | 1500 | 900 | 1100 | 45 | 100 |
| Comparative Example 9 | 1500 | 40 | 40 | 1 | 100 |
| Comparative Example 10 | 1500 | 40 | 40 | 60 | 100 |
| Comparative Example 11 | 1500 | 40 | 40 | 45 | 800 |
| Comparative Example 12 | 150 | 40 | 40 | 45 | 100 |
| Comparative Example 13 | 1500 | 40 | 40 | 45 | 100 |
| Comparative Example 14 | 1500 | 40 | 40 | 45 | 100 |
| Comparative Example 15 | 1500 | 40 | 40 | 45 | 100 |
| Comparative Example 16 | 1500 | 40 | 40 | 45 | 100 |
| Comparative Example 17 | 1500 | 40 | 40 | 45 | 100 |
| Comparative Example 18 | 1500 | 40 | 40 | 45 | 100 |
| Comparative Example 19 | 1500 | 40 | 40 | 45 | 100 |
| Comparative Example 20 | 1500 | 40 | 40 | 45 | 100 |

**[Table 1B]**

| Note | Groove forming step | | | |
|---|---|---|---|---|
| | Laser irradiation conditions (second stage) | | | |
| | Laser output [W] | Rolling direction spot diameter [µm] | Sheet width direction spot diameter [µm] | Scanning speed [m/s] |
| Invention Example 1 | 50 | 50 | 50 | 10 |
| Invention Example 2 | 15 | 50 | 50 | 10 |
| Invention Example 3 | 50 | 50 | 50 | 10 |
| Invention Example 4 | 50 | 50 | 50 | 10 |
| Invention Example 5 | 130 | 50 | 50 | 10 |
| Invention Example 6 | 50 | 15 | 15 | 10 |
| Invention Example 7 | 50 | 800 | 800 | 10 |
| Invention Example 8 | 50 | 30 | 100 | 10 |
| Invention Example 9 | 50 | 100 | 30 | 10 |
| Invention Example 10 | 50 | 50 | 50 | 2 |
| Invention Example 11 | 50 | 50 | 50 | 20 |
| Invention Example 12 | 50 | 50 | 50 | 45 |
| Invention Example 13 | 10 | 20 | 20 | 30 |
| Invention Example 14 | 70 | 100 | 100 | 20 |
| Invention Example 15 | 100 | 200 | 200 | 30 |
| Invention Example 16 | 140 | 1000 | 900 | 10 |
| Invention Example 17 | 50 | 50 | 50 | 30 |
| Invention Example 18 | 50 | 50 | 50 | 30 |
| Invention Example 19 | 50 | 50 | 50 | I 30 |
| Invention Example 20 | 50 | 50 | 50 | 30 |
| Invention Example 21 | 50 | 50 | 50 | 30 |
| Comparative Example 1 | 50 | 50 | 50 | 30 |
| Comparative Example 2 | 50 | 50 | 50 | 30 |
| Comparative Example 3 | 50 | 50 | 50 | 30 |
| Comparative Example 4 | 50 | 50 | 50 | 30 |
| Comparative Example 5 | 50 | 50 | 50 | 30 |
| Comparative Example 6 | 50 | 50 | 50 | 30 |
| Comparative Example 7 | 50 | 50 | 50 | 30 |
| Comparative Example 8 | 50 | 50 | 50 | 30 |
| Comparative Example 9 | 50 | 50 | 50 | 30 |
| Comparative Example 10 | 50 | 50 | 50 | 30 |
| Comparative Example 11 | 50 | 50 | 50 | 30 |
| Comparative Example 12 | 50 | 50 | 50 | 30 |
| Comparative Example 13 | 8 | 50 | 50 | 30 |
| Comparative Example 14 | 50 | 1100 | 1000 | 20 |
| Comparative Example 15 | 50 | 1000 | 1100 | 20 |
| Comparative Example 16 | 50 | 50 | 50 | 55 |
| Comparative Example 17 | 170 | 50 | 50 | 30 |
| Comparative Example 18 | 50 | 8 | 50 | 30 |
| Comparative Example 19 | 50 | 50 | 8 | 30 |
| Comparative Example 20 | 50 | 50 | 50 | 1 |

**[Table 2]**

| Note | Grinding step | | | | |
|---|---|---|---|---|---|
| | Brush conditions | | | | |
| | Transfer speed [mpm] | Roll rotation speed [rpm] | Rolling reduction [mm] | Grain size of abrasive grains | Brush diameter [mm] |
| Invention Example 1 | 30 | 1200 | 4 | # 80 | 300 |
| Invention Example 2 | 90 | 1200 | 4 | # 80 | 300 |
| Invention Example 3 | 30 | 1200 | 4 | # 80 | 300 |
| Invention Example 4 | 30 | 1200 | 4 | # 80 | 300 |
| Invention Example 5 | 30 | 1200 | 4 | # 80 | 300 |
| Invention Example 6 | 30 | 1200 | 4 | # 80 | 300 |
| Invention Example 7 | 30 | 1200 | 4 | # 80 | 300 |
| Invention Example 8 | 30 | 1200 | 4 | # 80 | 300 |
| Invention Example 9 | 30 | 1200 | 4 | # 80 | 300 |
| Invention Example 10 | 10 | 1200 | 4 | # 80 | 300 |
| Invention Example 11 | 30 | 600 | 4 | # 80 | 300 |
| Invention Example 12 | 30 | 1900 | 4 | # 80 | 300 |
| Invention Example 13 | 30 | 1200 | 8 | # 80 | 300 |
| Invention Example 14 | 30 | 1200 | 4 | # 360 | 300 |
| Invention Example 15 | 30 | 1200 | 4 | # 80 | 500 |
| Invention Example 16 | 30 | 400 | 4 | # 80 | 300 |
| Invention Example 17 | 30 | 1200 | 1 | # 80 | 300 |
| Invention Example 18 | 120 | 1200 | 4 | # 80 | 300 |
| Invention Example 19 | 30 | 1200 | 4 | # 500 | 300 |
| Invention Example 20 | 30 | 1200 | 4 | # 80 | 600 |
| Invention Example 21 | - | - | - | - | - |
| Comparative Example 1 | 30 | 1200 | 4 | # 80 | 300 |
| Comparative Example 2 | 30 | 1200 | 4 | # 80 | 300 |
| Comparative Example 3 | 30 | 1200 | 4 | # 80 | 300 |
| Comparative Example 4 | 30 | 1200 | 4 | # 80 | 300 |
| Comparative Example 5 | 30 | 1200 | 4 | # 80 | 300 |
| Comparative Example 6 | 30 | 1200 | 4 | # 80 | 300 |
| Comparative Example 7 | 30 | 1200 | 4 | # 80 | 300 |
| Comparative Example 8 | 30 | 1200 | 4 | # 80 | 300 |
| Comparative Example 9 | 30 | 1200 | 4 | # 80 | 300 |
| Comparative Example 10 | 30 | 1200 | 4 | # 80 | 300 |
| Comparative Example 11 | 30 | 1200 | 1 | # 80 | 300 |
| Comparative Example 12 | 30 | 300 | 3 | # 80 | 300 |
| Comparative Example 13 | 30 | 1200 | 4 | # 80 | 300 |
| Comparative Example 14 | 30 | 1200 | 3 | # 80 | 300 |
| Comparative Example 15 | 30 | 1200 | 3 | # 80 | 300 |
| Comparative Example 16 | 30 | 1200 | 3 | # 80 | 300 |
| Comparative Example 17 | 30 | 1200 | 3 | # 80 | 300 |
| Comparative Example 18 | 30 | 1200 | 3 | # 80 | 300 |
| Comparative Example 19 | 30 | 1200 | 3 | # 80 | 300 |
| Comparative Example 20 | 30 | 1200 | 3 | # 80 | 300 |

**[Table 3]**

| Note | Form of projection in groove | | | Form of projection at groove edge portion | | Evaluation |
|---|---|---|---|---|---|---|
| | | | | | | Magnetic characteristics |
| | Projection maximum width [µm] | Projection maximum height [µm] | Orientation difference between average crystal orientation and Goss orientation [deg.] | Projection maximum width [µm] | Projection maximum height [µm] | W17/50 [W/kg] |
| Invention Example 1 | 10 | 15 | 30 | 1 | 1 | 0.721 |
| Invention Example 2 | 11 | 16 | 32 | 5 | 5 | 0.731 |
| Invention Example 3 | 40 | 40 | 30 | 2 | 2 | 0.725 |
| Invention Example 4 | 5 | 5 | 15 | 1 | 1 | 0.720 |
| Invention Example 5 | 42 | 41 | 20 | 4 | 4 | 0.740 |
| Invention Example 6 | 45 | 48 | 24 | 5 | 4 | 0.733 |
| Invention Example 7 | 5 | 6 | 30 | 1 | 1 | 0.735 |
| Invention Example 8 | 11 | 8 | 35 | 2 | 3 | 0.729 |
| Invention Example 9 | 45 | 45 | 40 | 4 | 4 | 0.722 |
| Invention Example 10 | 18 | 21 | 36 | 1 | 1 | 0.725 |
| Invention Example 11 | 10 | 17 | 31 | 4 | 5 | 0.734 |
| Invention Example 12 | 18 | 25 | 21 | 1 | 2 | 0.736 |
| Invention Example 13 | 22 | 23 | 25 | 1 | 1 | 0.738 |
| Invention Example 14 | 15 | 14 | 22 | 5 | 4 | 0.733 |
| Invention Example 15 | 12 | 19 | 14 | 5 | 5 | 0.724 |
| Invention Example 16 | 12 | 18 | 29 | 6 | 10 | 0.739 |
| Invention Example 17 | 9 | 14 | 25 | 6 | 10 | 0.740 |
| Invention Example 18 | 22 | 23 | 31 | 7 | 8 | 0.745 |
| Invention Example 19 | 10 | 14 | 22 | 10 | 11 | 0.748 |
| Invention Example 20 | 25 | 30 | 25 | 7 | 9 | 0.746 |
| Invention Example 21 | 10 | 15 | 30 | 20 | 20 | 0.749 |
| Comparative Example 1 | 1 | 5 | 30 | 2 | 4 | 0.766 |
| Comparative Example 2 | 55 | 60 | 30 | 4 | 3 | 0.768 |
| Comparative Example 3 | 12 | 1 | 24 | 4 | 2 | 0.774 |
| Comparative Example 4 | 45 | 55 | 36 | 5 | 5 | 0.788 |
| Comparative Example 5 | 11 | 1 | 25 | 2 | 3 | 0.758 |
| Comparative Example 6 | 8 | 1 | 31 | 2 | 2 | 0.762 |
| Comparative Example 7 | 52 | 48 | 20 | 5 | 1 | 0.759 |
| Comparative Example 8 | 44 | 56 | 18 | 2 | 2 | 0.769 |
| Comparative Example 9 | 56 | 50 | 35 | 3 | 5 | 0.771 |
| Comparative Example 10 | 4 | 1 | 33 | 2 | 1 | 0.780 |
| Comparative Example 11 | 10 | 1 | 15 | 7 | 5 | 0.788 |
| Comparative Example 12 | 5 | 1 | 1 | 6 | 9 | 0.798 |
| Comparative Example 13 | 22 | 25 | 5 | 4 | 4 | 0.754 |
| Comparative Example 14 | 31 | 35 | 8 | 3 | 5 | 0.768 |
| Comparative Example 15 | 35 | 10 | 6 | 1 | 1 | 0.774 |
| Comparative Example 16 | 30 | 10 | 5 | 2 | 3 | 0.759 |
| Comparative Example 17 | 1 | 3 | 15 | 4 | 5 | 0.776 |
| Comparative Example 18 | 2 | 1 | 20 | 2 | 2 | 0.784 |
| Comparative Example 19 | 1 | 1 | 10 | 4 | 1 | 1 0.777 |
| Comparative Example 20 | 3 | 1 | 11 | 2 | 3 | 0.780 |

As shown in Tables 1A to 3, in a case where the laser irradiation conditions or the assist gas injection conditions were out of the range defined in the present invention, the projection having the preferable shape was not formed in the groove. Alternatively, the average crystal orientation of the projection was out of the range of the present invention. In these grain-oriented electrical steel sheets, the iron loss was high (Comparative Examples 1 to 20).

On the other hand, in a case where the laser irradiation conditions and the assist gas injection conditions were within the range defined in the present invention, the projection defined in the present invention was formed in the groove. In addition, the orientation difference between the average crystal orientation of the projection and the Goss orientation was 10 degrees or more. These grain-oriented electrical steel sheets had a low iron loss (Invention Examples 1 to 21).

In addition, among these conditions, in a case where the grinding conditions by the brush roll was performed under a predetermined condition, the projection at the groove edge portion was reduced, and the iron loss was further reduced (Invention Examples 1 to 15).

### INDUSTRIAL APPLICABILITY

According to the present invention, it is possible to provide the grain-oriented electrical steel sheet having the low iron loss and the manufacturing method therefor. Thus, industrial applicability is high.

### REFERENCE SIGNS LIST

1 Grain-oriented electrical steel sheet
11 Steel sheet (base steel sheet)
21 Groove
31 Inlet portion of groove
41 Groove edge portion
102 Projection (inside groove)
H Protrusion height (height of projection)
W Width of projection
RD Rolling direction
TD Sheet width direction
RC Reference curve
101 Projection (groove edge portion)
RS Reference plane

## Claims

1. A grain-oriented electrical steel sheet comprising:
a steel sheet having a surface in which a plurality of grooves extending in a direction intersecting a rolling direction and having a depth in a sheet thickness direction are formed,
wherein, in a cross section of the steel sheet parallel to the rolling direction and parallel to the sheet thickness direction,
at least one projection is present on a side surface or a bottom surface of the groove,
the projection has a maximum height of 2 to 50 µm and a maximum width of 2 to 50 µm, and
an orientation difference between an average crystal orientation of the projection and a Goss orientation is 10 degrees or more.

2. The grain-oriented electrical steel sheet according to claim 1,
wherein, when a distance from an inlet portion of the groove to an opposite inlet portion of the groove in the cross section is defined as a width of the groove and a region equivalent to the width of the groove from the inlet portion of the groove of the steel sheet in a direction opposite to a center of the groove in the rolling direction is defined as a groove edge portion, the projection at the groove edge portion has a maximum height of 5 µm or less and a maximum width of 5 µm or less.

3. The grain-oriented electrical steel sheet according to claim 1 or 2, wherein
a forsterite film is formed on the surface of the steel sheet.

4. The grain-oriented electrical steel sheet according to claim 3, wherein
an insulating coating is formed on a surface of the forsterite film.

5. The grain-oriented electrical steel sheet according to claim 1 or 2, wherein
an insulating coating is formed on the surface of the steel sheet.

6. A method for manufacturing the grain-oriented electrical steel sheet according to claim 1 or 2, the method comprising:
a hot rolling step of heating and hot rolling a slab to form a hot rolled sheet;
a hot rolled sheet annealing step of annealing the hot rolled sheet after the hot rolling step;
a cold rolling step of pickling and cold rolling the hot rolled sheet after the hot rolled sheet annealing step to form a steel sheet;
a decarburization annealing step of performing decarburization annealing on the steel sheet;
a final annealing step of applying an annealing separator to the steel sheet after the decarburization annealing step and performing final annealing; and
a groove forming step of forming a groove in the surface of the steel sheet by performing laser irradiation on the surface of the steel sheet and forming a projection on a side surface or a bottom surface of the groove between the cold rolling step and the final annealing step,
wherein the groove forming step includes
a first stage of irradiating a portion with a laser having a laser output of 200 to 3000 W, having a condensed spot diameter of 10 to 1000 µm, which is a diameter including 86% of the laser output in a rolling direction, and having a condensed spot diameter of 10 to 1000 µm in a sheet width direction, at a scanning speed of 2 to 50 m/s, and spraying an assist gas having a flow rate of 1 to 500 L/min, and
a second stage of irradiating the same portion as the portion irradiated with the laser in the first stage with a laser having a laser output of 10 to 150 W, having a condensed spot diameter of 10 to 1000 µm in the rolling direction, and having a condensed spot diameter of 10 to 1000 µm in the sheet width direction at a scanning speed of 2 to 50 m/s.

7. The method for manufacturing the grain-oriented electrical steel sheet according to claim 6, further comprising:
a grinding step of grinding the surface of the steel sheet after the groove forming step by using a brush roll to which abrasive grains are fixed,
wherein, in the grinding step,
the brush roll rotates in a direction facing a transfer direction of the steel sheet at a position where the brush roll abuts on the steel sheet,
a transfer speed of the steel sheet is 5 to 100 mpm,
a rotation speed of the brush roll is 500 to 2000 rpm,
a rolling reduction of the brush roll is 2 to 10 mm,
the abrasive grains have a grain size of #40 to #400, and
a diameter of the brush roll is 200 to 500 mm.
